# EUROPEAN PATENT SPECIFICATION

(11) **EP 0 933 850 B1**
(45) Date of publication and mention of the grant of the patent: **13.06.2001**
(21) Application number: 98830036.4
(22) Date of filing: 27.01.1998
(51) Int. Cl.: H02G 1/00, H02G 3/06

(54) **A modular ducting device**
Modularer Kabelkanal
Goulotte modulaire

(43) Date of publication of application: 04.08.1999
(73) Proprietor: Placo S.r.l., 20047 Brugherio, Milano (IT)
(72) Inventor: Magni, Gianni Mario, 20047 Brugherio (Milano) (IT)
(74) Representative: Sutto, Luca, Ing.

(56) References cited:
- EP-A- 0 552 117
- WO-A-88/07282
- DE-A- 2 323 692
- DE-U- 7 328 608
- FR-A- 2 472 293
- FR-A- 2 686 141
- GB-A- 1 050 742

## Description

The present invention relates to a modular ducting device.

In particular the subject device may be utilised for ducting electrical or telephone wires or wires for other utilities as well as to contain pipelines for transporting fluids of various natures.

As is well known, several ducting systems are currently available on the market, differentiated by the material whereof the ducting itself is constructed.

In particular, the most commonly used ducts are made of iron, with its surface appropriately treated with galvanisation or with anti-corrosion protective coatings.

Although they are widely employed, iron ducts are, however, very heavy and hence difficult to transport and handle during the assembly phase.

It should also be noted that since iron is a conductive material there is a need to provide for the earthing of the raceways or ducts constructed with this material.

Moreover, the need for surface treatments constitutes a burden in terms of times and costs when manufacturing the duct.

To this end it should be noted that if iron ducts with high corrosion-proof performance are to be obtained, it is necessary to use ducts coated with protective enamels, which have no small impact on the overall cost of the product.

It should further be noted that during the assembly phase, when there is a need to connect consecutive portions of the duct or to associate branches, bends or accessories of various kinds to the duct itself, it is necessary to use junction elements requiring the use of bolts or nails, which in turn need holes on the duct.

The latter, in addition to being areas wherein the structure is weakened also constitute, obviously, areas wherein corrosion can start notwithstanding the surface treatment of the duct itself with galvanisation or painting.

As an alternative to iron ducts, in order to improve behaviour vis à vis corrosive agents, stainless steel ducts have become widespread; although they have excellent characteristics even in aggressive environments, they are nonetheless very costly and they still present the drawback of requiring screw-on connecting systems between a portion of duct and the next one.

This clearly complicates the assembly phases to no small extent, further increasing the overall costs of an installation using such a kind of ducting device.

In addition to the devices described above, ducts made of thermoplastic material are known in the art, mostly usable in internal environments wherein there are no sudden temperature variations or exposures to aggressive agents, which ducts normally comprise a fastening base ready to be fastened to a wall or to a roof element able to be engaged to the fastening base to define a space wherein electrical wires and the like can be run.

The various segments that define the duct are longitudinally connected to each other through hooks and counter-hooks positioned at the head between one segment and the next segment.

It should be noted that this type of ducts has very reduced costs, although it presents extremely poor mechanical characteristics, allowing it to be used merely as an aesthetic finishing element with no ability to serve as a structural support or to provide any protection from particularly aggressive outside agents.

Lastly, in the attempt to obtain sufficiently reduced costs, ducting systems able to provide good mechanical performance and resistance to aggressive agents, the use has become widespread of cableways made with thermosetting polymers, possibly strengthened with reinforcing fibres, manufactured mainly with two technologies: moulding or pultrusion.

In particular, ducts obtained by moulding as well as their accessories, such as bends, branches etcetera, have an extremely simple structure, in order to be manufactured by moulding. Such ducts demonstrate poor operating flexibility, poor weatherproofing, they are easy to open even without using particular equipment or tools and, overall, they cannot adequately meet all the operating requirements that may have to be faced in terms of geometry of the duct in its entirety, in terms of ease of installation, and in terms of compliance with current standards.

In turn, ducts obtained by pultrusion, though widely employed industrially, necessarily have rectilinear form.

Therefore any accessories such as branches, unions, bends must be obtained by cutting and joining sections of the duct itself, with an enormous burden in terms of installation times and with results of dubious quality, both in terms of mechanical sealing and in terms of weatherproofing, as well as - lastly - in terms of aesthetic finish.

It is also known from document FR 8026152 a ducting device for electrical wires in which rectilinear ducting segments are set to be consecutively engaged to each other. The mechanical connection therebetween is obtained by means of inserts, having a first portion engaged in a corresponding coupling seat provided on each rectilinear segment and a second portion engaged in corresponding coupling seat provided on the consecutive rectilinear segment In particular these inserts are placed in correspondence of the lateral walls of the ducting segments.

Document WO 88/07282 shows a profiled section joining device to connect together profiled sections of an electric-cable ducting system. The sections are provided with T-groove in which a joining device is intended to be placed so that the device will bridge the joined location upon completion of the join.

In document EP 552117 a modular ducting device is shown. Such a device comprises a pre-set number of rectilinear ducting segments set to be consecutively engaged to each other. The connection of the various parts of the duct is obtained by means of engaging elements which are snap-fitted in corresponding coupling seat of two consecutive rectilinear segments.

It is also known from document DE 2323692 a connection device for joining ducting segments in which an insert has a first portion engaged in a forced manner in a seat provided in a rectilinear segment and a second portion engaged in a forced manner in a seat provided on the consecutive rectilinear segment.

In this situation, the fundamental object of the present invention is to make available a new modular ducting device able substantially to resolve all the drawbacks indicated above.

In particular, essential object of the invention is to realise a modular ducting device which mainly presents very good characteristics in terms of lightness and mechanical properties, together with good flexibility of employment and ease of assembly without the use of screws, rivets or similar connection systems requiring long interventions on the part of the installer.

An important object of the invention is to realise a modular ducting device able to be obtained combining the pultrusion and moulding techniques thereby minimising manufacturing cost.

Not the least object of the invention is to make available a ducting device comprising a reduced number of accessories, whilst affording a wide range of embodiments able substantially to meet all possible operating requirements. Lastly, an object of the invention is also to make available a ducting device assuring high corrosion resistance, good compatibility with food products, good aesthetic characteristics, good electrical insulation properties.

The objects indicated above and others beside, which will be more readily apparent from the description that follows, are substantially attained by a modular ducting device according to what is described in the accompanying claims.

Additional advantages shall be made more evident in the detailed description of a preferred, but not exclusive, embodiment of a modular ducting device according to the invention.

The description shall be made hereafter referring to the accompanying drawings, provided purely by way of non-limiting example, wherein:
- Figure 1 shows a perspective view of a longitudinal segment comprised in the subject device;
- Figure 2 is an interrupted view obtained along trace II-II in Figure 1;
- Figure 3 shows a longitudinal segment of the subject device similar to the one in Figure 1 and fitted with auxiliary components;
- Figure 4 is a view according to trace IV-IV in Figure 3;
- Figure 5 is an enlarged cross section obtained along trace V-V in Figure 1;
- Figure 6 is a cross section of a closure element able to be associated to the longitudinal segment as per Figures 1 and 5;
- Figure 7 shows an embodiment variation of a longitudinal segment of the subject modular ducting device;
- Figures 8, 10 and 12 show various curved segments according to the modular ducting device constituting the subject of the invention;
- Figures 9, 11 and 13 show perspective views of closure elements able to be associated to the curvilinear segments as per Figures 8, 10 and 12 respectively;
- Figure 14 is a perspective view showing two rectilinear ducting segments engaged consecutively to each other according to a pre-set inclination angle;
- Figure 15 schematically shows a pre-set number of ducting segments engaged consecutively to each other thereby defining an overall arched trajectory;
- Figure 16 is an interrupted view according to trace XVI-XVI in Figure 14;
- Figure 17 shows an enlarged detail of Figure 15;
- Figure 18 shows two ducting segments of the subject device engaged consecutively to each other according to a pre-set inclination angle in a plane orthogonal to the one as per Figure 14;
- Figure 19 schematically shows a plurality of ducting elements engaged consecutively to each other in the way shown in Figure 18 to define overall an arched profile developing in a plane orthogonal to the one as per Figure 15;
- Figure 20 is an interrupted view along trace XX-XX in Figure 18;
- Figure 21 shows an enlarged detail of Figure 19;
- Figure 22 shows a plan view of an auxiliary union element usable to connect two ducting segments having cross sections of different sizes;
- Figure 23 is a section along trace XXIII-XXIII as per Figure 22;
- Figure 24 shows a plan view of a T-shaped union element comprised in the subject ducting device;
- Figure 25 is a front view of the element shown in Figure 24;
- Figure 26 is a side view of the element shown in Figure 24.

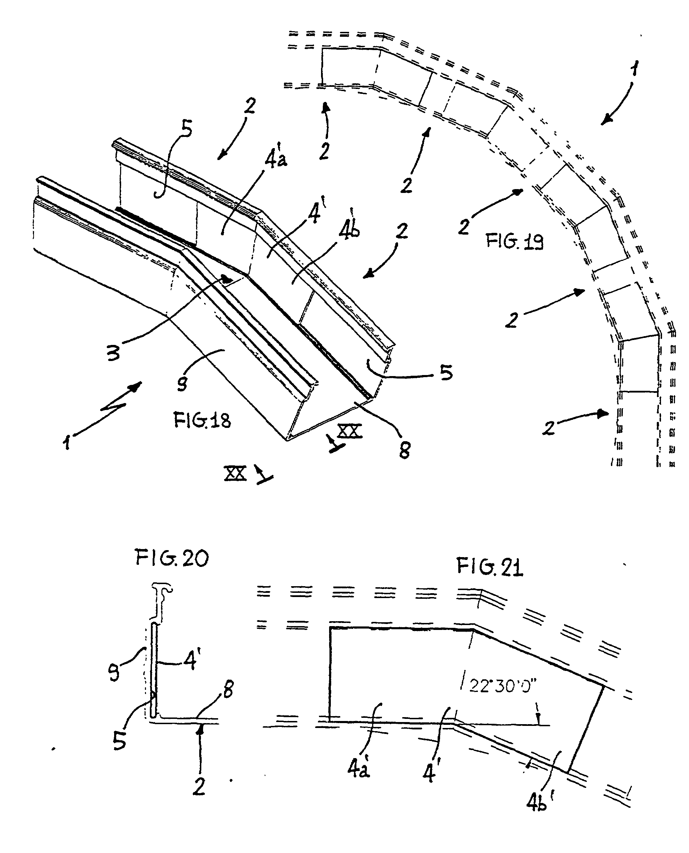

With reference to the accompanying drawings, and specifically to Figures 15 and 19, the number 1 indicates in its entirety a modular ducting device according to the invention.

The device 1 comprises a pre-set number of rectilinear ducting segments 2 ready to be consecutively engaged to each other thanks to connecting means 3 operating between each rectilinear segment and the subsequent rectilinear segment, thereby defining a mechanical connection therebetween.

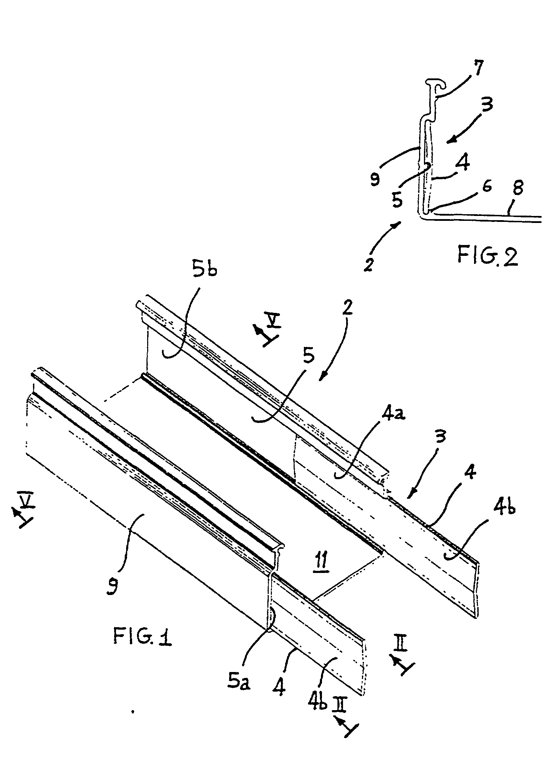

In greater detail, for each pair of consecutive rectilinear segments to be mutually connected, the connecting means 3 comprise at least an insert 4 having a first portion 4a, forcedly engaged in a corresponding coupling seat 5 provided on each rectilinear segment, and at least a second portion 4b, forcedly engaged in a corresponding coupling seat 5 provided on the subsequent rectilinear segment (see Figures 1,2,14,15,16,18,19 and 20).

It should be noted that the rectilinear segments 2 in particular comprise section bars, advantageously obtainable by means of extrusion or pultrusion techniques, made of plastic material with high mechanical resistance, preferably strengthened with reinforcing fibres (such as fibres of glass, carbon, etc.).

The rectilinear segments needing to be manufactured by means of pultrusion or extrusion, the coupling seats are advantageously defined by longitudinal ribs 6, 7 which develop over the entire longitudinal extension of the segment itself, as shall become more readily apparent farther on in the present description.

As the figures show, the rectilinear segments 2 present, in cross section, an essentially plane base wall 8 and at least a pair of side walls 9, 10 emerging transversely from the base wall to define therewith a longitudinal containment space 11 set to house electrical or telephone cables or cables for other utilities as well as ducts of various kinds.

More specifically, in the example shown each rectilinear segment 2 is provided with side walls 9, 10 positioned perpendicularly with respect to the base wall 8 and emerging from the side edges thereof.

Essentially in correspondence with each of such side walls 9, 10 is defined at least one respective coupling seat 5 which develops along the entire longitudinal extension of the side wall itself.

Each longitudinal seat 5 (see Figure 1) of each pre-set segment presents an end 5a to receive in engagement the first portion 4a of a connecting insert in order to realise the connection of the rectilinear segment with a subsequent rectilinear segment.

Such longitudinal seat also presents an opposite end 5b to receive in engagement the second portion 4b of a connecting insert 4 whose purpose is to realise the mechanical connection between the rectilinear segment and a preceding rectilinear segment.

Descending further in detail, it should be noted that the coupling seat 5 associated to each side wall 9, 10 of a rectilinear segment is defined by a first and by a second rib 6, 7 both longitudinal and distanced parallel to each other.

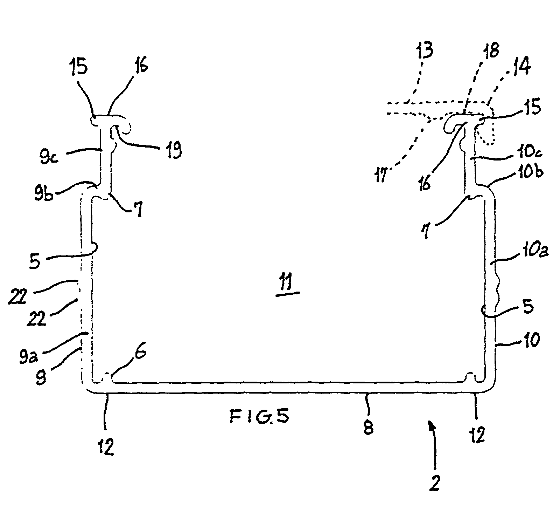

In greater detail, the first longitudinal rib 6 emerges from the base wall 8 internally to the longitudinal containment space 11 and it is positioned essentially in correspondence with a union area 12 between the base wall and one of the side walls (see Figure 5).

The second rib 7 related to each longitudinal seat is instead positioned along the respective side wall 9, 10 and it also emerges internally to the longitudinal containment space.

More precisely, each side wall 9, 10 presents, in cross section, an initial portion 9a, 10a connected vertically in continuation of the base wall, an intermediate portion 9b, 10b consecutive to the initial portion and transversely connected thereto in a direction internal to the containment space 11, and a terminal portion 9c, 10c itself consecutive transverse to the intermediate portion and directed away from the base wall in a direction essentially parallel to the initial portion.

As can further be noted in Figure 5, the second rib 7 emerges from the corresponding side wall 9, 10 internally to the containment wall and it is positioned essentially in correspondence with the intermediate portion 9b, 10b of the same side wall.

Returning now to the connection between a segment and the consecutive segment, it should be noted that each connecting insert 4 is defined by a plate which goes to engage the coupling seat 5 defined by the first and by the second rib positioning itself essentially parallel to the initial portion 9a, 10a of the side wall involved in the connection.

It should be noted that insert 4 can be inserted in the corresponding coupling seat 5 either by forcedly sliding it along a direction of insertion parallel to the side wall 9, 10 and to the first and second rib 6, 7 or by snap insertion along a direction of insertion transverse to the side wall itself.

Still with reference to the connecting insert 4 it should further be specified that the latter can have slightly undulated cross section (see Figure 2), thereby assuring a certain elasticity and hence transverse deformability in order to obtain an effective engagement with the ribs 6,7 defining the coupling seat 5.

It should further be noted that the particular conformation and the particular disposition of the connecting insert guarantee high mechanical resistance in correspondence with the junction areas between a rectilinear segment and the consecutive one, both in terms of cutting stresses and in terms of torsion stresses.

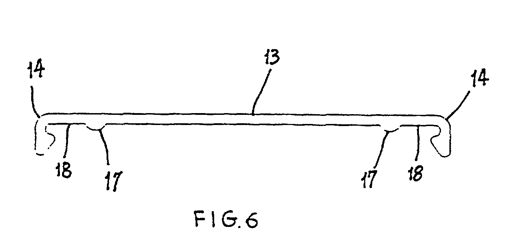

Also according to the invention, the subject device comprises a closure element 13 (see Figures 5 and 6) able to be associated to each rectilinear segment to the side opposite to the base wall 8.

More precisely, each closure element can be forcedly engaged to the side walls 9, 10 of the respective rectilinear segment and it presents for this purpose hook-shaped longitudinal edges 14 destined to co-operate with corresponding anchoring ribs 15 developing on a free longitudinal edge 16 of each side wall 9, 10.

Advantageously, the closure element also comprises longitudinal projections 17 emerging internally to the containment space 11 with reference to the engagement condition of the closure element to the respective rectilinear ducting segment (see Figure 5) and each parallel to the corresponding hook-shaped longitudinal edge 14 thereby defining longitudinal bands 18 for the containment of each of the free edges 16 of the side walls 9, 10.

In practice, once the closure element 13 is engaged to the side walls, the free edges 16 thereof are confined in the aforementioned longitudinal bands 18, with evident mechanical collaboration of the lid 13 with the rest of the structure of the rectilinear ducting segment which, in cross section, comes to assume a closed contour thereby increasing its resistance to torsion, flexure and cuts. For instance, should loads of a certain dimension bear down on the base wall 8, the side walls 9, 10 though they would tend to fold onto the base wall would in any case be contained in this motion by the presence of the longitudinal ribs 17 active on the free edges 16 of the side walls themselves.

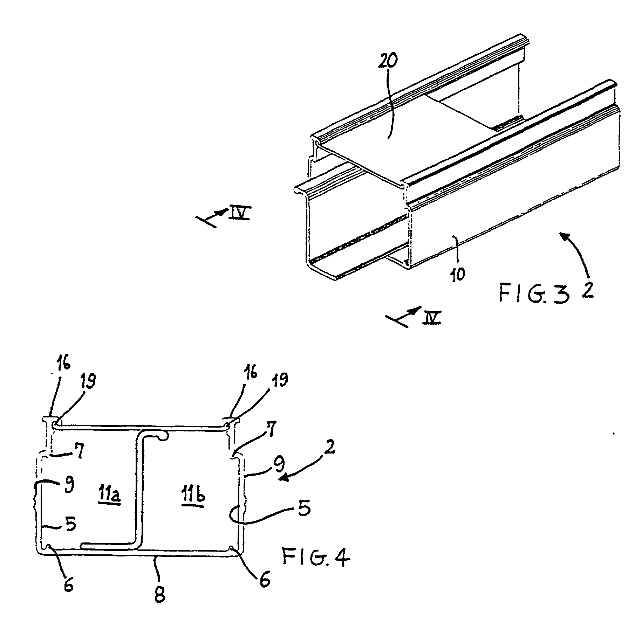

Analysing additional aspects of the subject device, it should be noted that each side wall of a rectilinear ducting segment presents preferably in correspondence with its free edge 16, an auxiliary longitudinal seat 19 oriented internally to the containment space and destined to receive in sliding insertion an auxiliary support panel 20 (see Figures 3, 4 and 5) which is particularly useful for maintaining the cables and pipes housed in the containment space in a correct position when the rectilinear segment is fastened in a vertical or upside-down position.

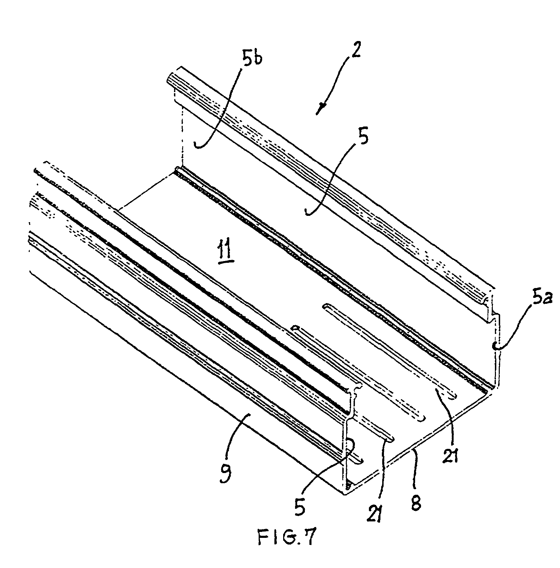

It should also be noted that each rectilinear element 2 can comprise a pre-set number of through openings 21 located in correspondence with the base wall (see Figure 7) and possibly also in correspondence with one or both side walls and/or in correspondence with the closure element thereby creating a good ventilation of the modular device under assembly conditions thus dissipating any heat generated by electrical cables or the like.

It should also be stressed that in correspondence with an external surface of each side wall 9, 10 each rectilinear segment is preferably provided with two projections 22 set mutually close and having the purpose of guiding the tip of a tool, when during the assembly phase side holes are to be obtained.

Figure 3 and Figure 4 also show the possibility of housing within the containment space a separator baffle 23, for instance configured with an "S" shaped cross section, so that the housing space can be subdivided into two longitudinal areas 11a, 11b separated from each other.

Obviously, in case of need multiple separation baffles may be used, also having different shapes from the one shown by way of example in the aforementioned figures.

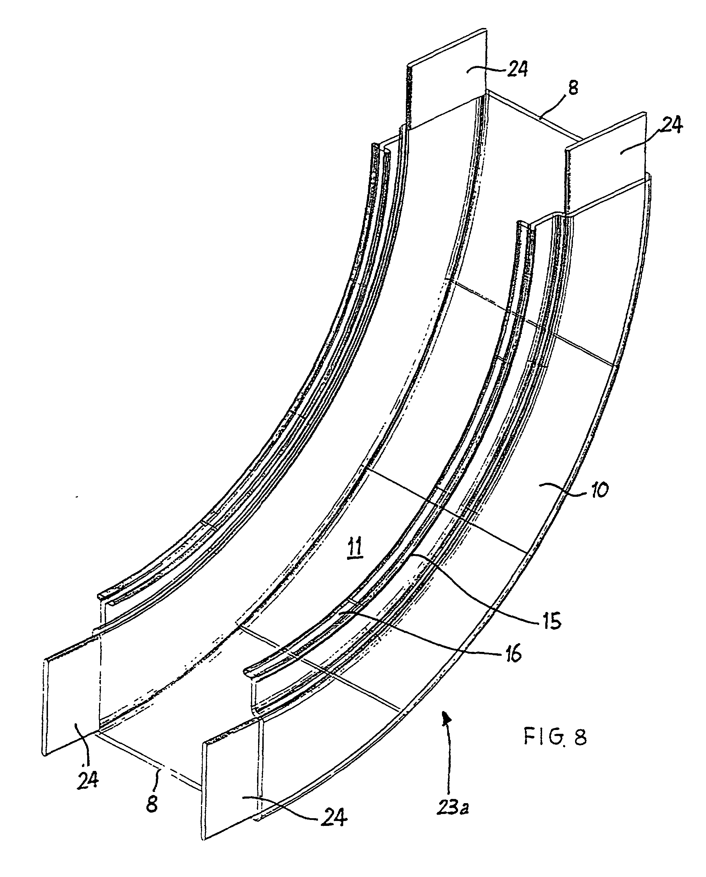

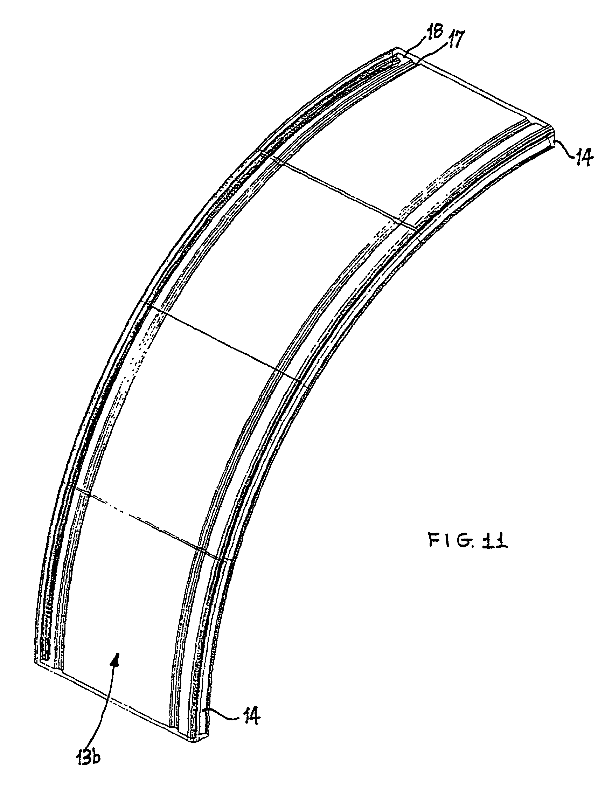

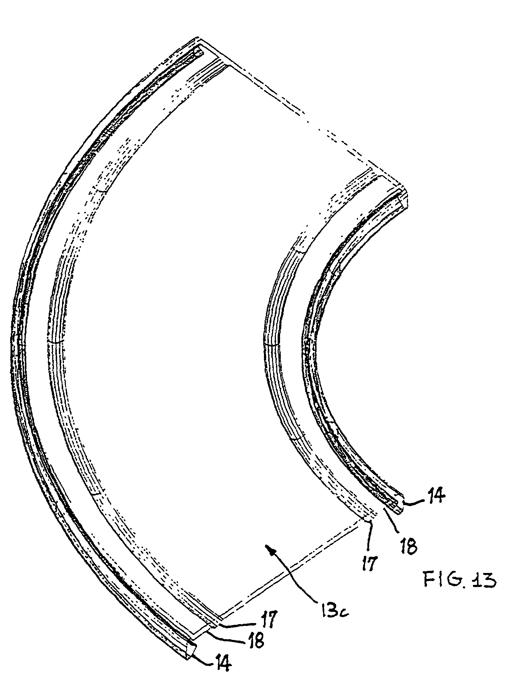

Also in accordance with the present invention, the modular device comprises a pre-set number of curved segments 23a, 23b, 23c (see Figures 8 through 13) set to be interposed between consecutive rectilinear segments 2 to obtain short-radius deviations in whatever direction and plane they may be required.

Each curved segment 23a, 23b, 23c presents opposite ends provided with engagement portions 24 counter-shaped to the coupling seats 5 provided on the rectilinear segments 2 so that such engagement portions can be coupled forcedly into the engagement seats themselves.

Preferably, each curved segment presents a cross section whose outer profile is the same as the one previously described with reference to the section of the rectilinear segments thereby being able to be placed in continuation thereof without any aesthetic discontinuity. The outer profile of such cross section and in any case the common parts of the section of the curved segments with the section of the rectilinear segments shall therefore not be re-described and Figures 8 through 13 shall report the same numeric references used to describe the rectilinear segments 2 to identify corresponding parts.

Note that the curved segments shall in turn be able to be fitted with a closure element 13a, 13b, 13c whose section has an outer profile corresponding to the one provided for the closure elements of the rectilinear segments and curved profile in order to marry the corresponding curved segment whereto such closure element is associated. Also in reference to the elements 13a, 13b, 13c, the parts in common with corresponding parts present on the closure elements 13 of the rectilinear segments have been indicated with the same reference number.

In the embodiments shown (see Figures 8 through 13) different curved segments are depicted.

In particular, Figure 8 shows a first type of curved segment 23 having base wall 8 constituted by a cylindrical wall sector wherefrom perpendicularly emerge the side walls 9, 10 shaped as an annulus segment.

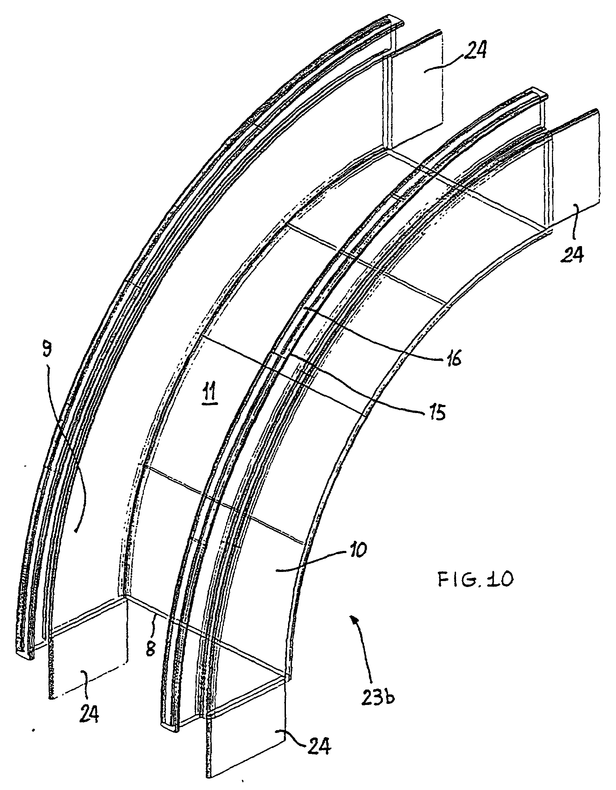

Figure 10 shows a second type of curved segment 23b similar to the one in Figure 8 wherein, however, both the base wall 8 and the side walls 9, 10 have opposite curvature with respect to the corresponding elements of the curved segment as per Figure 8.

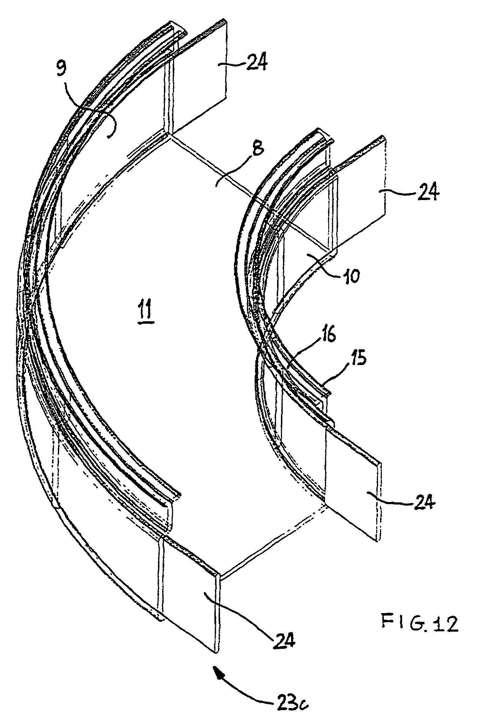

Figure 12 instead shows a third curved segment 23c with plane base wall 8 shaped as a segment of an annulus wherefrom perpendicularly emerge the side walls 9, 10, each shaped as a cylindrical wall sector.

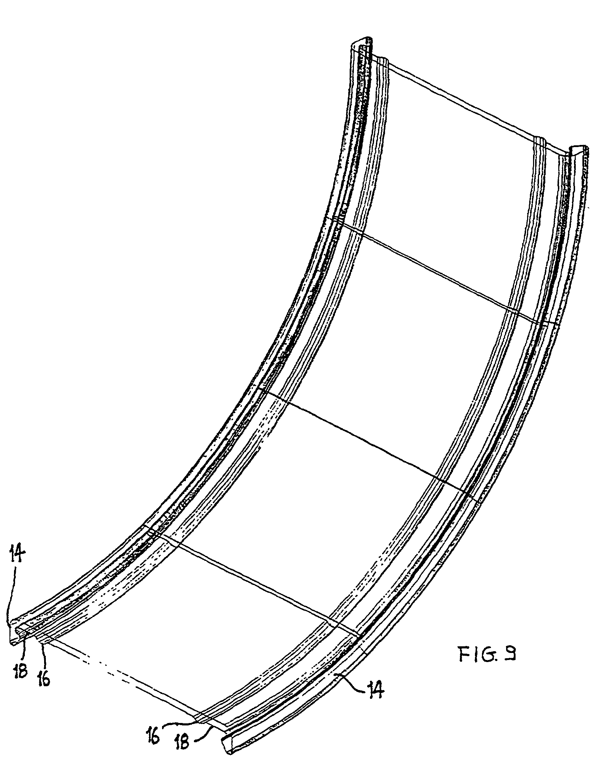

Figures 9,11,13 show closure elements 13a, 13b, 13c able to be associated respectively to the curved segments as per Figures 8,10,12.

In this case as well the engagement between lid and curved segment is of the forced type so as to prevent opening without the use of specific tools.

It should be noted that the engagement portions 24 emerging from the opposite ends of each curved segment are preferably joined or fastened a posteriori to the piece which can also be made of material with high mechanical resistance, preferably plastic material possibly strengthened with reinforcing fibres.

Typically plastic resins strengthened with glass fibre are particularly suitable both to construct rectilinear and curved segments.

The later, obviously, may easily be obtained by moulding.

Advantageously, insert 4' operating in connection between consecutive rectilinear segments 2 can also comprise a first portion 4'a with longitudinal axis of development inclined according to a pre-set angle with respect to the longitudinal axis of development of the second portion 4'b of the insert itself.

In practice the first and the second portion, though they share the plane whereon they lie, are inclined with respect to each other as Figures 18 through 21 clearly show, by an angle which in the specific case is - by way of example - equal to 22°30'.

In this manner it is possible to connect consecutively two or more rectilinear segments (see Figure 19) obtaining overall a ducting device realising a curve with wide radius without thereby needing to use dedicated components, aside from the insert described above.

In a further variation, the inserts 4' can present a first portion 4'a positioned in a plane inclined by a pre-set angle (for instance 22°30') with respect to another support plane of the second portion of the insert itself.

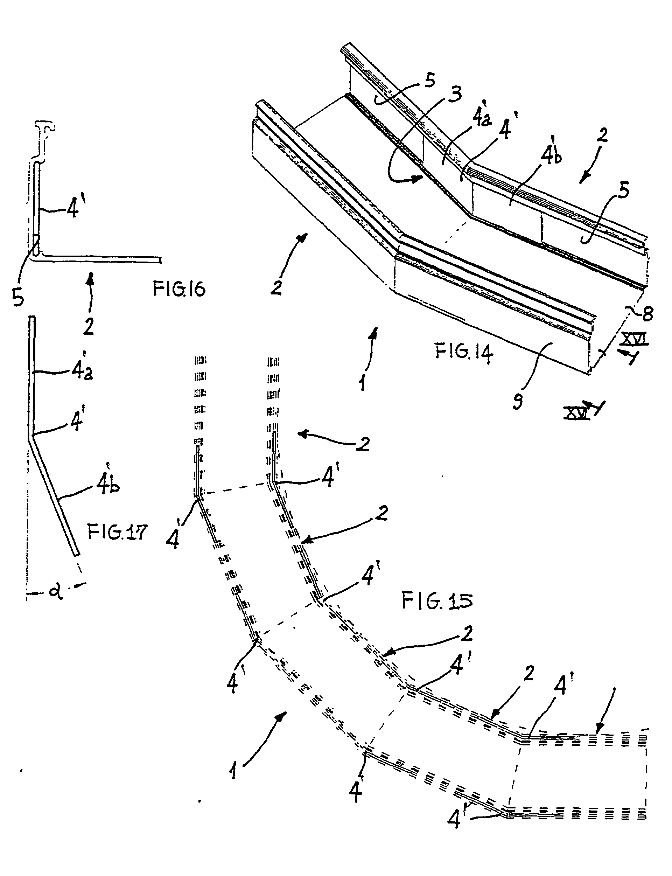

In this way, by consecutively engaging two or more rectilinear segments to each other, it will be possible to obtain a ducting device realising an arc of wide radius positioned in a plane orthogonal to the one as per Figure 19, as shown in particular by Figures 14 through 17.

The ducting device constituting the subject of the invention also comprises auxiliary elements able to be easily associated to the rectilinear segments described above.

In particular, the device can comprise an auxiliary union element 25 having a base wall 26 and possibly a top wall 27 whose transverse extension varies proceeding along the longitudinal development of the auxiliary union element itself thereby obtaining a continuous connection between a rectilinear segment having a pre-set section and a rectilinear segment consecutive thereto having section of similar geometry and greater or smaller dimensions.

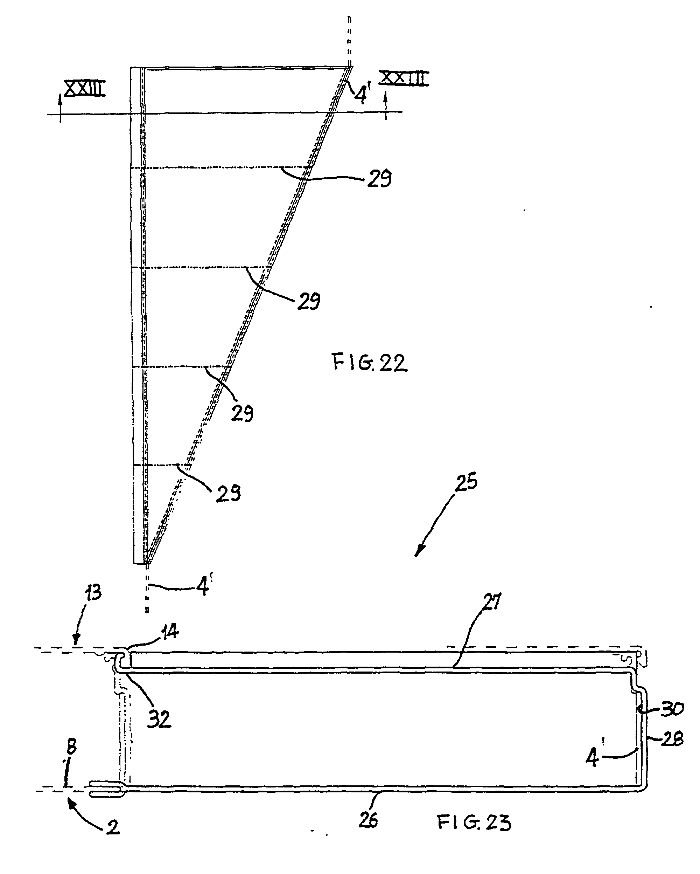

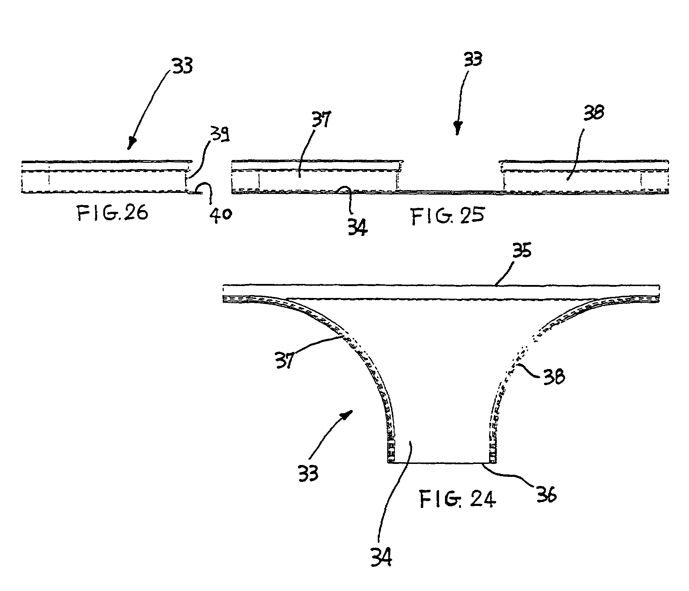

In greater detail, the auxiliary union element (show in detail in Figures 22, 23) is fitted with a base wall that is preferably triangular and in particular shaped as a right triangle from whose edge or hypotenuse emerges a side wall 28 positioned essentially in a plane perpendicular to the base wall 26.

The union element briefly described above is laterally engaged in correspondence with a flank of the rectilinear segment 2 of smaller section having previously removed at least a portion of the side wall 9,10 thereof of a length equal to the longitudinal extension of the auxiliary union element.

Advantageously, the auxiliary union element 25 comprises a plurality of transverse pre-notched lines 29 distanced parallel to each other in longitudinal direction, thereby allowing to obtain, with a single union element, the ability to place in mutual connection rectilinear segments of various transverse dimensions.

It should be noted that at the mechanical connection level the auxiliary union element 25 provides for the presence of a connection seat 30 extending along the side wall 28 of the auxiliary element itself to receive corresponding portions 4'a, 4'b of the connecting couplings 4' similarly to what has already been described with reference to the segments 2.

Note in particular that the base wall of the auxiliary union element defines a right triangle wherein the lesser acute angle has an extension equal to that of said pre-set angle .

In this way, the same connection couplings described above with reference to the device in Figure 15 may be used.

In addition, the auxiliary union element provides for a fork-shaped connecting lip 31 extending in correspondence with the base wall 30, destined to engage (for instance by riveting) the base wall of the rectilinear segment 2 of lesser cross section size whereto such auxiliary element is to be laterally associated.

Moreover, if the auxiliary element is closed at the top, also its top wall 27 will present a hook-shaped portion 32 positioned terminally in such a way as to engage with the longitudinal hook-shaped edges 14 of the closure element associated to the rectilinear segment of lesser section (dashed on the left-hand side of Figure 23).

As a further accessory, the subject device also comprises a T-shaped union element 33 having a base wall 34 provided with a side of maximum extension 35, destined to engage a flank of a rectilinear ducting segment and with a side of minimum extension 36, destined to engage a head end of a rectilinear segment 2 positioned orthogonally with respect to said maximum extension side 35.

From the base wall of the T-shaped union element emerge laterally a pair of side walls 37, 38 converging towards each other away from the side of maximum extension 35 as Figures 24 and 25 clearly show.

Such side walls emerge transversely (preferably perpendicularly) from the base wall 34 in such a way as to define a cross section of the T-shaped union element counter-shaped to the cross section of each of the rectilinear ducting segments (see the front view in Figure 25).

Each of the side walls of the T-shaped union element is also provided with a respective coupling seat 39 so as to receive the corresponding portions of said connecting couplings 4 and thereby accomplish the connection with the rectilinear segments destined to be joined in a T.

In addition to this type of connection, the T-shaped union element may also be fastened by means of a lip 40 placed in correspondence with the side of greater extension 35 which can be coupled or bolted or riveted to the base wall of the rectilinear segment whereto the T-shaped union element itself is engaged.

Note that during the assembly phase such rectilinear segment shall necessarily have to undergo an opening in correspondence with its side wall such as to receive the side of greater extension of the T-shaped union element.

Obviously, should circumstances so require it will be possible to apply to the T-shaped union a closure element counter-shaped thereto.

The invention affords important advantages.

In the first place, it has been possible to obtain with a minimum number of components a ducting device able to offer extremely flexibility of use since ducting of any length and geometry whatsoever can be constructed.

Moreover, thanks to the particular structure and co-operation of the various parts constituting both the rectilinear segments and the curved segments (base wall, side wall, closure element, couplings), it is possible to obtain a ducting device with extremely high structural performance.

Each part has been designed to co-operate adequately with the others without any weakening to the device even in the junction areas between one segment and the next.

Additionally, in terms of thermal and electrical insulation of the cables contained in the subject device, it should be noted that the latter can reach absolute seal levels by setting appropriate gaskets in correspondence with the junction areas between a segment and the next one, thereby complying also with the strictest regulations in that regard.

Furthermore, in terms of manufacturing, a previously unattained optimisation is reached, since the rectilinear segments can easily be obtained by extrusion or by pultrusion, as they are constituted by section bars having constant section.

In turn, curved segments are of a limited number of types and can easily be obtained by moulding.

The combination of the two techniques allows to obtain a product with clearly high performance and contained costs.

It should also be noted that the aesthetic appearance of the product is very pleasant and, particularly thanks to the profile given to the side walls, once the lid is applied to the various segments the overall profile of the cross section of each segment is essentially rectangular without any ungainly irregularities such as projections or recesses.

Moreover, a fact of great importance is that the entire ducting device can be assembled without requiring particular equipment and with no need to drill holes or to apply connecting elements such as bolts and the like between a segment and the consecutive one. This notwithstanding, the device prevents the lid 13 from being opened without the use of appropriate tools. Lastly, the use of high-resistance plastic materials for the various components of the subject device allows to obtain a product with high mechanical characteristics and high resistance to the action of outside elements with no possibility for areas wherein corrosion may set in.

## Claims

1. Modular ducting device comprising:
- a pre-set number of rectilinear ducting segments (2) set to be consecutively engaged to each other, each rectilinear segment (2) presenting, in cross section, at least a base wall (8) and at least one pair of side walls (9, 10) emerging transversely from the base wall to define therewith a longitudinal containment space (11), in correspondence with each of said side walls being defined at least one respective coupling seat (5);
- connecting means (3) operatively active between each rectilinear segment and the consecutive rectilinear segment to define a mechanical connection therebetween, said connecting means comprising at least an insert (4) having a first portion (4a), engaged in a forced manner in a corresponding coupling seat (5) provided on each rectilinear segment, and at least a second portion (4b), engaged in a forced manner in a corresponding coupling seat provided on the consecutive rectilinear segment, said connecting means further comprising at least one insert (4') interposed between a rectilinear segment and the consecutive segment presenting its first portion (4'a) positioned in a plane inclined by a pre-set angle with respect to a plane whereon lies the second portion (4'b) of the insert itself, characterised in that the device comprises an auxiliary union element (25) having a base wall (26) whose transverse extension varies along the longitudinal development of the auxiliary union element itself, and a side wall (28) emerging from an edge of the base wall, said auxiliary union element being able to be laterally engaged to a rectilinear segment (2) in correspondence with a side wall thereof at least partially removed, the side wall (28) of the auxiliary union element (25) defining a coupling seat (30) to receive corresponding portions (4'a, 4'b) of said connecting couplings (4').

2. Device according to claim 1, characterised in that each rectilinear segment (2) comprises at least a respective coupling seat (5) developing over the entire longitudinal extension of the segment itself.

3. Device according to claim 1, characterised in that each coupling seat (5) provided on each side wall (9, 10) extends over the entire longitudinal development of each segment to receive in engagement, at one end (5a), the first portion (4a, 4'a) of an insert set to connect the rectilinear segment with a subsequent rectilinear segment and, at an opposite end (5b), the second portion (4b, 4'b) of an insert (4, 4') set to connect the rectilinear segment with a preceding rectilinear segment.

4. Device according to claim 3, characterised in that each coupling seat (5) associated to each side wall (9, 10) is defined by a first and by a second longitudinal ribs (6, 7) distanced parallel to each other, each insert (4', 4') being able to be inserted into the corresponding coupling seat (5) both by forced sliding along a direction of insertion parallel to the side wall, and by snap insertion along a direction of insertion transverse to the side wall itself.

5. Device according to claim 4, characterised in that the first longitudinal rib (6) emerges from the base wall (8) internally to the longitudinal containment space (11) and in correspondence with a union area (12) between base wall and side wall.

6. Device according to claim 4, characterised in that each side wall comprises, in cross section, an initial portion (9a, 10a), connected in continuation to the base wall, an intermediate portion. (9b, 10b) consecutive to the initial portion and directed internally to the containment wall (11), and a terminal portion (9c, 10c), consecutive to the intermediate portion and directed away from the base wall.

7. Device according to claim 6, characterised in that each second longitudinal rib (7) emerges from the corresponding side wall (9, 10) internally to the containment space (11) and is positioned in correspondence with said intermediate portion (9b, 10b).

8. Device according to claim 1, characterised in that each rectilinear segment comprises a closure element (13) able to be associated in a forced manner to the side walls (9, 10) of the segment itself from the opposite side with respect to the base wall (8).

9. Device according to claim 8, characterised in that said closure element (13) presents longitudinal hook-shaped edges (14) destined to engage corresponding anchoring ribs (15) provided in correspondence with a free edge (16) of each side wall (9, 10).

10. Device according to claim 9, characterised in that the closure element comprises longitudinal projections (17) emerging internally to the containment space (11) and parallel each to the corresponding hook-shaped edge (14) to define longitudinal bands (18) for the containment of each of the free edges of the side walls.

11. Device according to claim 1 or 9, characterised in that each side wall (9, 10) presents, preferably in correspondence with said free edge (16), an auxiliary longitudinal seat (19) to receive in sliding insertion an auxiliary support panel (20).

12. Device according to claim 1, characterised in that each rectilinear segment (12) comprises a pre-set number of through openings (21) positioned in correspondence with the base wall (8) and preferably also in correspondence with one or both side walls (9, 10).

13. Device according to any one of the previous claims, characterised in that it comprises a pre-set number of curved segments (23a, 23b, 23c) set to be interposed between consecutive rectilinear segments.

14. Device according to claim 13, characterised in that each curved segment (23a, 23b, 23c) presents a cross section whose outer profile has the same shape as that of the outer profile of the cross section of the rectilinear segments (2).

15. Device according to claim 14, characterised in that each curved segment (23a, 23b, 23c) presents, in correspondence with each of its opposite ends, engagement portions (24) able to be forcedly coupled into the coupling seats (5) provided on the rectilinear segment (2) to be connected.

16. Device according to claim 1, characterised in that at least one insert (4') operating between consecutive rectilinear segments comprises a first portion (4'a) having its longitudinal axis of development inclined according to a pre-set angle with respect to a longitudinal axis of development of the second portion (4'b) of the insert itself, said first and said second portion sharing the plane whereon they lie.

17. Device according to claim 1, characterised in that said auxiliary union element (25) comprises a plurality of pre-notched transverse lines (29) distanced parallel to each other.

18. Device according to claim 1, characterised in that it comprises a T-shaped union element (33) having:
a base wall (34) provided with a side of maximum extension (35) destined to engage a flank of a rectilinear ducting segment (2), and with a side of minimum extension (36) destined to engage a head end of a rectilinear segment positioned orthogonally with respect to said side of maximum extension (35); and
a pair of side walls (37, 39) converging towards each other away from the side of maximum extension (35), each of said side walls emerging transversely from the base side and being fitted with a respective coupling seat to receive coupling portions (4).

## Patentansprüche

1. Modulare Kanaleinrichtung, umfassend:
- eine vorbestimmte Anzahl von geraden Kanalsegmenten (2), die bereitgestellt sind, nacheinander miteinander in Eingriff zu kommen, wobei jedes gerade Segment (20 im Querschnitt mindestens eine Basiswand (8) und mindestens ein Paar von Seitenwänden (9, 10) aufweist, die quer von der Basiswand vorstehen, um mit diesen letzteren einen länglichen Aufnahmeraum (11) festzulegen, wobei im Bereich einer jeden dieser Seitenwände mindestens ein Kuppelsitz (5) festgelegt ist;
- Verbindungsmittel (3), die zwischen jedem geraden Segment und dem nachfolgenden, geraden Segment wirken, um eine mechanische Verbindung zwischen diesen herzustellen, wobei die Verbindungsmittel mindestens einen Einsatz (4) mit einem ersten Abschnitt (4a), der in einem entsprechenden an jedem geraden Segment vorgesehenen Kuppelsitz eingepresst ist, und mindestens einen zweiten Abschnitt (4b) umfassen, der in einem entsprechenden am darauffolgenden, geraden Segment vorgesehenen Kuppelsitz eingepresst ist, wobei die Verbindungsmittel überdies einen Einsatz (4') aufweisen, der zwischen dem geraden Segment und dem darauffolgenden Segment liegt, das seinen ersten Abschnitt (4'a) in einer um einen vorgegebenen Winkel gegenüber einer den zweiten Abschnitt (4'b) des Einsatzes selbst enthaltenden Ebene geneigten Ebene angeordnet aufweist, dadurch gekennzeichnet, dass aufweist, dadurch gekennzeichnet, dass die Kanaleinrichtung ein Hilfsübergangselement (25) mit einer Basiswand (26), deren Quererstreckung sich längs der Längsabwicklung der Hilfsübergangselementes selbst ändert, und eine Seitenwand (28) umfasst, die von einem Rand der Basiswand vorsteht, wobei das Hilfsübergangselement seitlich an einem geraden Segment (2)im Bereich einer mindestens teilweise abgenommenen Seitenwand dieses letzteren in Eingriff kommen kann, wobei die Seitenwand (28) des Hilfsübergangselementes (25) einen Kuppelsitz (30) zur Aufnahme von entsprechenden Abschnitten (4'a, 4'b) der Verbindungseinsätze (4') festlegt.

2. Kanaleinrichtung nach Anspruch 1, dadurch gekennzeichnet, dass jedes gerade Segment (2) mindestens einen entsprechenden Kuppelsitz (5) umfasst, der sich längs der gesamten Längserstreckung der Segmentes selbst erstreckt.

3. Kanaleinrichtung nach Anspruch 1, dadurch gekennzeichnet, dass jeder an jeder Seitenwand (9, 10) vorgesehene Kuppelsitz (5) sich längs der gesamten Längserstreckung eines jeden Segmentes erstreckt, um an einem Ende (5a) den ersten Abschnitt (4a, 4'a) eines Einsatzes, der bereitgestellt ist, das gerade Segment mit einem darauffolgenden, geraden Segment zu verbinden, und an einem gegenüberliegenden Ende (5b) den zweiten Anschnitt (4b, 4'b) eines Einsatzes (4, 4') zu ergreifen, der bereitgestellt ist, das gerade Segment mit einem geraden, vorangehenden Seg-Segment mit einem geraden, vorangehenden Segment zu verbinden.

4. Kanaleinrichtung nach Anspruch 3, dadurch gekennzeichnet, dass jeder, jeder Seitenwand (9, 10) zugeordnete Kuppelsitz (5) durch einen ersten und einen zweiten Längssteg (6, 7) festgelegt ist, die von einander parallel beabstandet sind, wobei jeder Einsatz (4, 4') in den entsprechenden Kuppelsitz (5) sowohl über Schubpressung längs einer zur Seitenwand parallelen Einschubrichtung als auch längs einer zur Seitenwand selbst querliegenden Richtung schnappartig einführbar ist.

5. Kanaleinrichtung nach Anspruch 4, dadurch gekennzeichnet, dass der erste Längssteg (6) von der Basiswand (8) innerhalb des länglichen Aufnahmeraumes (11) und im Bereich eines Übergangsbereiches (12) zwischen der Basiswand und der Seitenwand vorsteht.

6. Kanaleinrichtung nach Anspruch 4, dadurch gekennzeichnet, dass jede Seitenwand im Querschnitt einen Anfangsabschnitt (9a, 10a), der in Fortsetzung mit der Basiswand verbunden ist, einen Zwischenabschnitt (9b, 10b), der am Anfangsabschnitt anschließt und innerhalb des Aufnahmeraumes (11) verläuft, und einen Endabschnitt (9c, 10c) umfasst, der am Zwischenabschnitt anschließt und sich von der Basiswand weg erstreckt.

7. Kanaleinrichtung nach Anspruch 6, dadurch gekennzeichnet, dass jeder zweite Längssteg (7) von der der entsprechenden Seitenwand (9, 10) innerhalb des Aufnahmeraumes (11) vorsteht und im Bereich des Zwischenabschnitts (9b, 10b) positioniert ist.

8. Kanaleinrichtung nach Anspruch 1, dadurch gekennzeichnet, dass jedes gerade Segment ein Verschlusselement (13) umfasst, das zwangsweise den Seitenwänden (9, 10) des Segments selbst auf der, von der Basiswand (8) abgewandten Seite zuordenbar ist.

9. Kanaleinrichtung nach Anspruch 8, dadurch gekennzeichnet, dass das Verschlusselement (13) hakenartige Längskanten (14) aufweist, die entsprechende Verankerungsstege (15) ergreifen, die im Bereich einer freien Kante (16) einer jeden Seitenwand (9, 10) vorgesehen sind.

10. Kanaleinrichtung nach Anspruch 9, dadurch gekennzeichnet, dass das Verschlusselement Längserhebungen (17) umfasst, die innerhalb des Aufnahmeraums (11) vorstehen und jeweils zur entsprechenden hakenartigen Kante (14) parallel sind, um Längsstreifen (18) zur Aufnahme einer jeden der freien Kanten der Seitenwände festzulegen.

11. Kanaleinrichtung nach Anspruch 1 oder 9, dadurch gekennzeichnet, dass jede Seitenwand (9, 10) bevorzugt im Bereich der freien Kante (16) einen Hilfslängssitz (19) zum Einschub einer Hilfsstützplatte (20) aufweist.

12. Kanaleinrichtung nach Anspruch 1, dadurch gekennzeichnet, dass jedes gerade Segment (12) eine vorgegebene Anzahl von Durchgangsöffnungen (21) umfasst, die im Bereich der Basiswand (8) und bevorzugt auch im Bereich einer oder beider Seitenwände (9, 10) angeordnet sind.

13. Kanaleinrichtung nach einem beliebigen der vorstehenden Ansprüche, dadurch gekennzeichnet, dass sie eine vorgegebene Anzahl von gekrümmten Segmenten (23a, 23b, 23c) umfasst, die zwischen geraden, nach einander folgenden Segmenten zu liegen kommen.

14. Kanaleinrichtung nach Anspruch 13, dadurch gekennzeichnet, dass jedes gekrümmte Segment (23a, 23b, 23c) einen Querschnitt aufweist, dessen Außenkontur ein Profil aufweist, das gleich jenem der Außenkontur des Querschnitts der geraden Segmente (2) ist.

15. Kanaleinrichtung nach Anspruch 14, dadurch gekennzeichnet, dass jedes gekrümmtes Segment (23a, 23b, 23c) im Bereich eines jeden seiner gegenüberliegenden Enden Eingriffsabschnitte (24) aufweist, die in die Kuppelsitze (5) einpressbar sind, die am zu verbindenden geraden Segment (2) vorgesehen sind.

16. Kanaleinrichtung nach Anspruch 1, dadurch gekennzeichnet, dass mindestens ein Einsatz (4'), der zwischen nacheinander folgenden geraden Segmenten wirkt, einen ersten Abschnitt (4'a) umfasst, der seine sich längs erstreckende Achse gemäß einem vorgemäß einem vorgegebenen Winkel gegenüber einer sich längs erstreckenden Achse des zweiten Abschnitte (4'b)des Einsatzes selbst geneigt hat, wobei der erste und der zweite Abschnitt eine gemeinsamen sie aufnehmende Ebene besitzen.

17. Kanaleinrichtung nach Anspruch 1, dadurch gekennzeichnet, dass das Hilfsübergangselement (25) eine Vielzahl von vorgekerbten, parallel voneinander beabstandeten Querlinien (29) umfasst.

18. Kanaleinrichtung nach Anspruch 1, dadurch gekennzeichnet, dass sie ein T-förmiges Übergangselement (33) umfasst, das:
- eine Basiswand (34), die mit einer Seite höchster Erstreckung (35) zur Ergreifung einer Flanke eines geraden Kanalelementes (2) und mit einer Seite kleinster Erstreckung (36) versehen ist, die dazu bestimmt ist, ein Kopfende eines geraden Segmentes zu ergreifen, das senkrecht zur Seite höchster Erstreckung (35) angeordnet ist; und
- ein Paar von Seitenwänden (37) besitzt, die zueinander von der Seite höchster Erstreckung weg zusammenlaufen, wobei jede der Seitenwände von der Basiswand quer absteht und mit einem entsprechenden Kuppelsitz zur Aufnahme von Einsatzabschnitten (4) versehen ist.

## Revendications

1. Goulotte modulaire, comprenant:
- un nombre Dréétabli de segments rectilignes de canalisation (2) disposés pour être engagés les uns à la suite des autres, chaque segment rectiligne (2) présentant, en coupe transversale, au moins une paroi de base (8) et au moins une paire de parois latérales (9, 10) faisant saillie transversalement de la paroi de base à définir avec cette dernière un espace de logement longitudinal (11), en correspondance de chacune desdites parois latérales étant défini au moins un siège d'emmanchement respectif (5);
- des moyens de liaison (3) actifs de manière opérationnelle entre chaque segment rectiligne et le segment rectiligne suivant, pour définir une liaison mécanique entre eux, lesdits moyens de liaison comprenant au moins un joint à insertion (4) ayant une première portion (4a) engagée à force dans un sièae d'emmanchement correspondant (5) prévu sur chaque segment rectiligne, et au moins une deuxième portion (4b) engagée à force dans un siège d'emmanchement correspondant prévu sur le segment rectiligne suivant, lesdits moyens de liaison comprenant en outre au moins un joint à insertion (4') interposé entre un segment rectiligne et le segment suivant lequel présente sa première portion (4'a) située dans un plan incliné selon un angle préétabli par rapport à un plan dans lequel se trouve la deuxième portion (4'b) de ce joint à insertion lui-même, caractérisée en ce que la goulotte comporte un élément de raccordement auxiliaire (25) ayant une paroi de base (26) dont l'extension transversale varie le long de l'extension longitudinale de l'élément de raccordement auxiliaire lui-même, et une paroi latérale (28) émergeant d'un bord de la paroi de base, ledit élément de raccordement auxiliaire étant en mesure d'être relié latéralement à un segment rectiligne (2) en correspondance de l'une de ses parois latérales du moins partiellement enlevée, la paroi latérale (28) de l'élément de raccordement auxiliaire (25) définissant un siège d'emmanchement (30) pour recevoir les portions correspondantes (4'a, 4'b) desdits joints à insertion (4').

2. Goulotte selon la revendication 1, caractérisée en ce que chaque segment rectiligne (2) comporte au moins un siège d'emmanchement respectif (5) s'étendant sur toute l'extension longitudinale du segment lui-même.

3. Goulotte selon la revendication 1, caractérisée en ce que chaque siège d'emmanchement (5) prévu sur chaque paroi latérale (9, 10) s'étend sur toute l'extension longitudinale de chaque segment pour recevoir en engagement, à l'une de ses extrémités (5a), la première portion (4a, 4'a) d'un joint à insertion destiné à relier le segment rectiligne au segment rectiligne suivant et, à son extrémité opposée (5b), la deuxième portion (4b, 4'b) d'un joint à insertion (4, 4') destiné à relier le segment rectiligne au segment rectiligne précédent.

4. Goulotte selon la revendication 3, caractérisée en ce que chaque siège d'emmanchement (5) associé à chaque paroi latérale (9, 10) est défini par une première et une deuxième nervures longitudinales (6, 7) espacées l'une de l'autre d'une façon parallèle, chaque joint à insertion (4, 4') étant en mesure d'être inséré dans le siège d'emmanchement correspondant (5) soit par glissement à force le long d'une direction d'insertion parallèle à la paroi latérale, soit par insertion à déclic le long d'une direction d'insertion transversale à ladite paroi latérale.

5. Goulotte selon la revendication 4, caractérisée en ce que la première nervure longitudinale (6) fait saillie de la paroi de base (8) à l'intérieur de l'espace de logement longitudinal (11) et en correspondance d'une zone de raccordement (12) entre la paroi de base et la paroi latérale.

6. Goulotte selon la revendication 4, caractérisée en ce que chaque paroi latérale comporte, en coupe transversale, une portion initiale (9a, 10a), reliée à la paroi de base sur le prolongement de cette dernière, une portion intermédiaire (9b, 10b) disposée à la suite de la portion initiale et dirigée à l'intérieur de l'espace de logement (11), et une portion finale (9c, 10c) venant après la portion intermédiaire et s'étendant en éloignement de la paroi de base.

7. Goulotte selon la revendication 6, caractérisée en ce que chaque deuxième nervure longitudinale (7) fait saillie de la paroi latérale correspondante (9, 10) à l'intérieur de l'espace de logement (11) et est disposée en correspondance de ladite portion intermédiaire (9b, 10b).

8. Goulotte selon la revendication 1, caractérisée en ce que chaque segment rectiligne comporte un élément de fermeture (13) susceptible d'être associé à force aux parois latérales (9, 10) du segment lui-même du côté opposé par rapport à la paroi de base (8).

9. Goulotte selon la revendication 8, caractérisée en ce que ledit élément de fermeture (13) présente des bords longitudinaux en forme de crochet (14) destinés à engager des nervures d'ancrage correspondantes (15) prévues en correspondance d'un bord libre (16) de chaque paroi latérale (9, 10).

10. Goulotte selon la revendication 9, caractérisée en ce que l'élément de fermeture comporte des saillies longitudinales (17) émergeant à l'intérieur de l'espace de logement (11) et chacune parallèle au bord en forme de crochet (14) correspondant, pour définir des bandes longitudinales (18) pour le logement de chacun des bords libres des parois latérales.

11. Goulotte selon la revendication 1 ou 9, caractérisée en ce que chaque paroi latérale (9, 10) présente, de préférence en correspondance dudit bord libre (16), un siège longitudinal auxiliaire (19) pour recevoir par insertion à glissement un panneau support auxiliaire (20).

12. Goulotte selon la revendication 1, caractérisée en ce que chaque segment rectiligne (12) comporte un nombre préétabli d'ouvertures de passage (21) situées en correspondance de la paroi de base (8) et de préférence également en correspondance de l'une des parois latérales ou de toutes les deux (9, 10).

13. Goulotte selon l'une quelconque des revendications précédentes, caractérisée en ce qu'elle comporte un nombre préétabli de segments courbés (23a, 23b, 23c) destinés à être interposés entre des segments rectilignes venant les uns après les autres.

14. Goulotte selon la revendication 13, caractérisée en ce que chaque segment courbé (23a, 23b, 23c) présente une section transversale dont le profil extérieur a la même forme que le profil extérieur de la section transversale des segments rectilignes (2).

15. Goulotte selon la revendication 14, caractérisée en ce que chaque segment courbé (23a, 23b, 23c) présente, en correspondance de chacune de ses extrémités opposées, des portions d'engagement (24) susceptibles d'être emmanchées à force dans les sièges d'emmanchement (5) prévus sur le segment rectiligne (2) à relier.

16. Goulotte selon la revendication 1, caractérisée en ce qu'au moins un joint à insertion (4') agissant entre des segments rectilignes venant les uns après les autres comporte une première portion (4'a) ayant son axe longitudinal d'extension incliné suivant un angle préétabli par rapport à l'axe longitudinal d'extension de la deuxième portion (4'b) du joint à insertion lui-même, lesdites première et deuxième portions se trouvant dans le même plan de disposition.

17. Goulotte selon la revendication 1, caractérisée en ce que ledit élément de raccordement auxiliaire (25) comporte une pluralité de lignes transversales préalablement entaillées (29), espacées les unes des autres de façon parallèle.

18. Goulotte selon la revendication 1, caractérisée en ce qu'elle comporte un élément de raccordement en forme de "T" (33) ayant:
- une paroi de base (34) pourvue d'un côté d'extension maximum (35) destiné à engager un flanc d'un segment de canalisation rectiligne (2), et d'un côté d'extension minimum (36) destiné à engager une extrémité de tête d'un segment rectiligne situé orthogonal audit côté d'extension maximum (35); et
- une paire de parois latérales (37, 39) convergeant l'une vers l'autre en éloignement du côté d'extension maximum (35), chacune desdites parois latérales faisant saillie transversalement du côté de base et étant pourvue d'un siège d'emmanchement respectif pour recevoir les joints à insertion (4).
